# EUROPEAN PATENT APPLICATION

(11) **EP 4 351 033 A1**
(43) Date of publication of application: **10.04.2024**
(21) Application number: 22811106.8
(22) Date of filing: 26.04.2022
(51) Int. Cl.: H04B 7/185, H04B 10/118, B64G 1/10, B64G 1/66

(54) **COMMUNICATION SATELLITE, SATELLITE CONSTELLATION, INTER-SATELLITE COMMUNICATION METHOD, ARTIFICIAL SATELLITE, AND GROUND FACILITY**

(30) Priority: 27.05.2021 JP 2021088999
(71) Applicant: MITSUBISHI ELECTRIC CORPORATION, Chiyoda-ku Tokyo 100-8310 (JP)
(72) Inventor: MUKAE, Hisayuki, Tokyo 100-8310 (JP)
(74) Representative: Plasseraud IP
(86) International application number: PCT/JP2022/018812
(87) International publication number: WO 2022/249832

(57) **Abstract**

A communication satellite (200A) flies in an orbit (21) with an orbital inclination θi deg and is equipped with a communication device (51C) having a visual field change range of ±θi deg around a Z axis with respect to a +X axis, where a +Z axis direction oriented in a plus direction in right-handed coordinates is geocentric direction and a +X axis direction oriented in the plus direction in the right-handed coordinates is forwarding direction. When passing the right ascension of ascending node, the communication satellite (200A) performs communication with a communication satellite (201) flying on the north side of an equatorial plane (401) in an orbit (22) that is adjacent in a longitude direction of a normal vector of an orbital plane of the orbit (21). Thus, even when adjacent orbits are laterally changed at the northern extremities of orbital planes, a communication circuit between the communication satellite (200A) and the communication satellite (201) does not break.

## Description

### Technical Field

The present disclosure relates to a communication satellite, a satellite constellation, an inter-satellite communication method, an artificial satellite, and a ground facility.

### Background Art

There are conventional surveillance systems using satellite constellations (Patent Literature 1, for instance). When information acquired by such a surveillance system is transmitted to the ground via a transmission system formed of a satellite constellation with a polar orbit consisting of multiple orbital planes or an inclined orbit consisting of multiple orbital planes, there is a problem of difficulty in maintaining a communication circuit without a breakdown because the orbit is laterally changed at the northern extremity or the southern extremity of an orbital plane.

### Citation List

### Patent Literature

Patent Literature 1: WO 2017/175696 pamphlet

### Summary of Invention

### Technical Problem

An object of the present disclosure is to provide a transmission system that causes no breakdown of a communication circuit even when the orbit is laterally changed at the northern extremity or the southern extremity of an orbital plane, in formation of a transmission system with a satellite constellation having a polar orbit consisting of multiple orbital planes or an inclined orbit consisting of multiple orbital planes.

### Solution to Problem

A communication satellite according to the present disclosure flies in an orbit with an orbital inclination θi deg and includes a communication device having a visual field change range of ±θi deg around a Z axis with respect to a +X axis, where a +Z axis direction oriented in a plus direction in right-handed coordinates is geocentric direction and a +X axis direction oriented in the plus direction in the right-handed coordinates is forwarding direction, wherein when passing a right ascension of ascending node, the communication satellite performs communication with a satellite flying on a north side of an equatorial plane in an orbit that is adjacent in a longitude direction of a normal vector of an orbital plane of said orbit.

### Advantageous Effects of Invention

According to the present disclosure, a transmission system that causes no breakdown of a communication circuit even when adjacent orbits are laterally changed at the northern extremities of orbital planes can be provided.

### Brief Description of Drawings

Fig. 1 is a diagram of Embodiment 1, illustrating a communication satellite 200 used in a satellite constellation 300.
Fig. 2 is a diagram of Embodiment 1, illustrating how communication directions between a communication satellite 200A and a communication satellite 201 are changed after passing the northern edges of orbital planes.
Fig. 3 is a diagram of Embodiment 1, illustrating a communication satellite 200C.
Fig. 4 is a diagram of Embodiment 1, illustrating a communication satellite 200CX.
Fig. 5 is a diagram of Embodiment 1, illustrating the satellite constellation 300.
Fig. 6 is a diagram of Embodiment 1, illustrating communication between adjacent orbits.
Fig. 7 is a diagram of Embodiment 1, illustrating a satellite constellation 300 in which annular communication and communication between adjacent orbits are possible.
Fig. 8 is a diagram of Embodiment 1, illustrating an inter-satellite communication method with a longitudinal communication network.
Fig. 9 is a diagram of Embodiment 1, where multiple communication satellites 200CX are flying on each one of multiple annular communication orbital planes 23P from Fig. 5.
Fig. 10 is a diagram of Embodiment 1, illustrating a configuration where communication satellites 200CXM are deployed in the satellite constellation 300 of Fig. 9.
Fig. 11 is a diagram of Embodiment 1, illustrating a configuration where the satellite constellation 300 includes at least one communication satellite 200CXC.
Fig. 12 is a diagram of Embodiment 1, illustrating a hardware configuration of the communication satellite 200.
Fig. 13 is a diagram of Embodiment 1, illustrating a hardware configuration of a ground facility 600.

### Description of Embodiments

In the following, an embodiment is described by using the drawings. Note that identical or corresponding portions in each drawing are provided with the same reference characters. In the description of the embodiment, description of identical or corresponding portions is omitted or simplified as appropriate. In the following embodiment, a "unit" may be read as "circuit", "step", "procedure", "process", or "circuitry" where appropriate.

In the embodiment below, artificial satellites are denoted as satellites.

### Embodiment 1.

### ***Description of structure***

In the following embodiment, a forwarding direction and a geocentric direction of a satellite are defined as follows. A +X axis direction oriented to a plus direction in the right-handed coordinates is defined as a satellite forwarding direction +X of the satellite, and a +Z axis direction oriented to the plus direction in the right-handed coordinates is defined as a geocentric direction +Z of the satellite.

### <Surveillance system 501: inclined orbit>

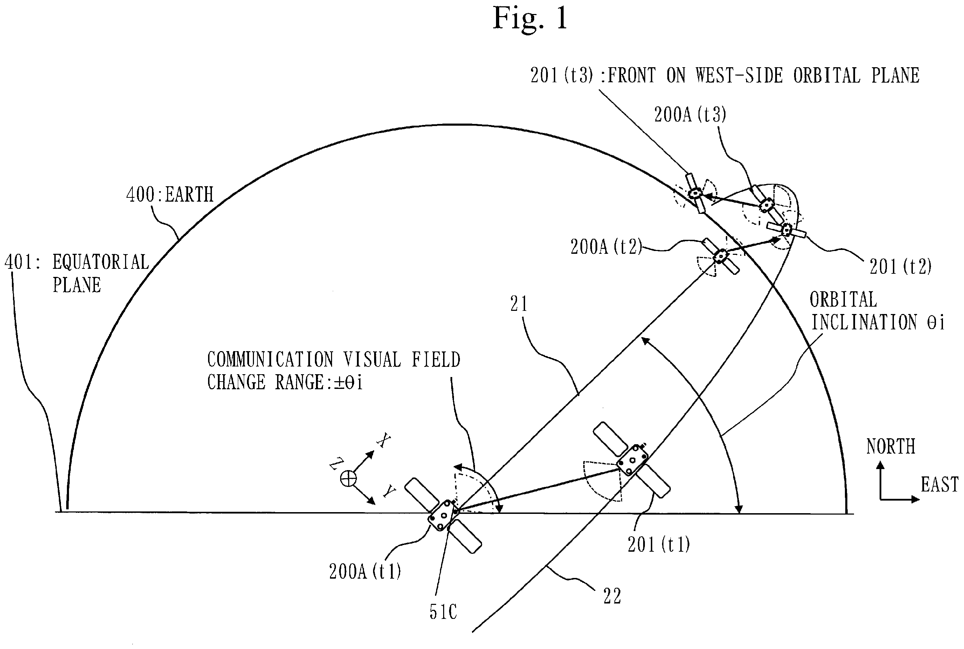

Referring to Figs. 1 to 13, a satellite constellation 300 in Embodiment 1 is described.

### <Communication satellite>

Fig. 1 shows a communication satellite 200 used in the satellite constellation 300, which is formed above the earth 400.

In Embodiment 1, the communication satellite 200 is classified as follows according to the kind of the communication device mounted on it.
(1) Communication satellite 200A:
   On a communication satellite 200A, a communication device 51C is mounted. When the communication satellite 200A passes the right ascension of ascending node, the communication device 51C performs communications with a satellite flying on the north side of the equatorial plane in adjacent movement.
(2) Communication satellite 200B:
   On a communication satellite 200B, a communication device 52C is mounted. When the communication satellite 200B passes the right ascension of ascending node, the communication device 52C performs communications with a satellite flying on the south side of the equatorial plane in adjacent movement.
(3) Communication satellite 200C:
   On the communication satellite 200B, a communication device 51C and a communication device 52C are mounted.
(4) Communication satellites 200Ax, 200BX, 200CX:
   When the communication satellite 200A, the communication satellite 200B, and the communication satellite 200C include a communication device 53C that communicates with a satellite flying in front on the same orbital plane and a communication device 54C that communicates with a satellite flying behind on the same orbital plane, they are denoted as a communication satellite 200AX, a communication satellite 200BX, and a communication satellite 200CX.
(5) Communication satellite 200X:
   When a communication satellite 200 has the communication device 53C and the communication device 54C mounted on it, the communication satellite 200 is denoted as a communication satellite 200X.
(6) Communication satellites 201, 202, 203, 204
   Satellites that fly in the adjacent orbits of the orbit in which the communication satellite 200 flies are denoted as communication satellites 201, 202, 203, and 204.

Fig. 1 shows the communication satellite 200A. The communication satellite 200A flies in an orbit 21 with an orbital inclination θi deg. The communication satellite 200A is equipped with a communication device 51C having a visual field change range of ±θi deg around the Z axis with respect to the +X axis, where the +Z axis direction oriented in the plus direction in the right-handed coordinates is the geocentric direction and the +X axis direction oriented in the plus direction in the right-handed coordinates is the forwarding direction (also called flying direction). When passing the right ascension of ascending node, indicated as time t1 in Fig. 1, the communication satellite 200A uses the communication device 51C to perform communication with a communication satellite 201 flying on the north side of an equatorial plane 401 in an orbit 22 that is adjacent in the longitude direction of a normal vector of the orbital plane of the orbit 21. At time t2, the communication satellite 200A and the communication satellite 201 perform communication near the northern extremities of their respective orbits, and at time t3, the orbits of the communication satellite 200A and the communication satellite 201 are changed.

In Fig. 1, it is assumed that the communication satellite 200A and the communication satellite 201 continue communications from time t1 throughout time t3. The orbit of the communication satellite 201, which was flying in front in the east-side adjacent orbit 22 at the time of passing the right ascension of ascending node (time t1), intersects the orbit of the communication satellite 200A at the northern edges of the orbital planes. Consequently, after passage of the northern edge (time t3), the orbital plane of the communication satellite 201 becomes the west-side adjacent orbital plane, and the communication directions between the communication satellite 200A and the communication satellite 201 are changed laterally, as shown in Fig. 1.

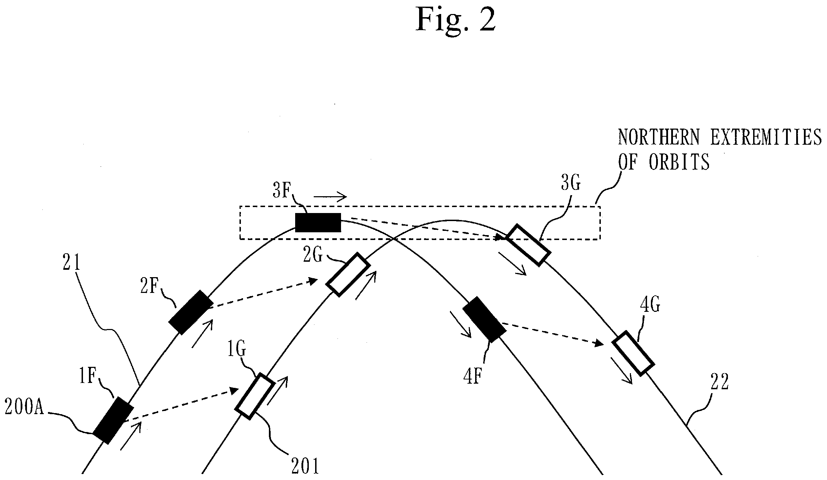

Fig. 2 illustrates how communication directions between the communication satellite 200A and the communication satellite 201 are changed after passing the northern edges of orbital planes. The communication satellite 200A flies from 1F to 4F, while the communication satellite 201 flies from 1G to 4G. Focusing on the communication satellite 200A, communication with the communication satellite 201 on the right side becomes communication with the communication satellite 201 on the left side (positions 4F, 4G) after passing the northern extremity of the orbit because of the change of the orbit 21 and the orbit 22. The communication visual field of the communication satellite 200A with the communication satellite 201, which flies on the north side on the east-side adjacent orbit equatorial plane at the time of passing the right ascension of ascending node, is in the range of ±θi with respect to orbital inclination θi about the geocentric direction +Z axis relative to the satellite forwarding direction +X axis. This causes the ± of the communication visual field direction to be changed due to the lateral change after passage of the northern extremity of the orbital plane, as shown in Fig. 2, and the visual field direction to rotate to -θi over the right ascension of descending node, enabling the communication satellite 200A to continuously communicate with the communication satellite 201 without communication breakdown.

When the communication satellite 201 flies in the south hemisphere, similar operations enable it to continuously perform communication without communication breakdown for one revolution or more around the orbit of the satellite.

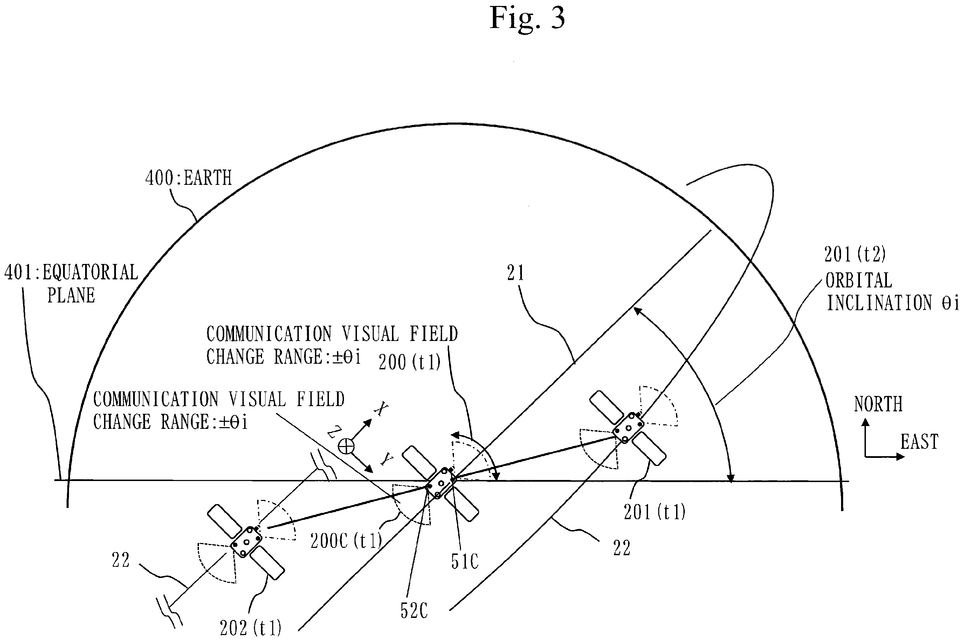

Fig. 3 illustrates the communication satellite 200C. The communication satellite 200C includes the communication device 51C and the communication device 52C, relative to the communication satellite 200A. The communication satellite 200C also flies in the orbit 21, specifically as follows. For the communication satellite 200C, the +Z axis direction, oriented in the plus direction in the right-handed coordinates, is the geocentric direction, and the +X axis direction, oriented in the plus direction in the right-handed coordinates, is the forwarding direction. The communication satellite 200C is equipped with the communication device 51C having a visual field change range of ±θi deg around the Z axis with respect to the +X axis, and the communication device 52C having a visual field change range of ±θi deg around the Z axis with respect to the -Z axis oriented in the opposite direction of +Z axis. The communication satellite 200C uses the communication device 51C to communicate with the communication satellite 201 flying on the north side of the equatorial plane 401 in the right-side (east-side) orbit 22 that is adjacent in the longitude direction of the normal vector of the orbital plane of the orbit 21. The communication satellite 200C also uses the communication device 52C to communicate with the communication satellite 202 flying on the south side of the equatorial plane 401 in the left-side (west-side) adjacent orbit 22. Since the communication satellite 200C has the communication device 52C, the communication satellite 200C and the communication satellite 202 adjacent to it on the west side can continuously perform communications with each other without communication breakdown, as with Fig. 1. Although Fig. 3 illustrates the communication satellite 200C with the communication device 51C and the communication device 52C, the communication satellite 200B only having the communication device 52C can also continue communication with the communication satellite 202 adjacent on the west side in a similar manner to the communication satellite 200C.

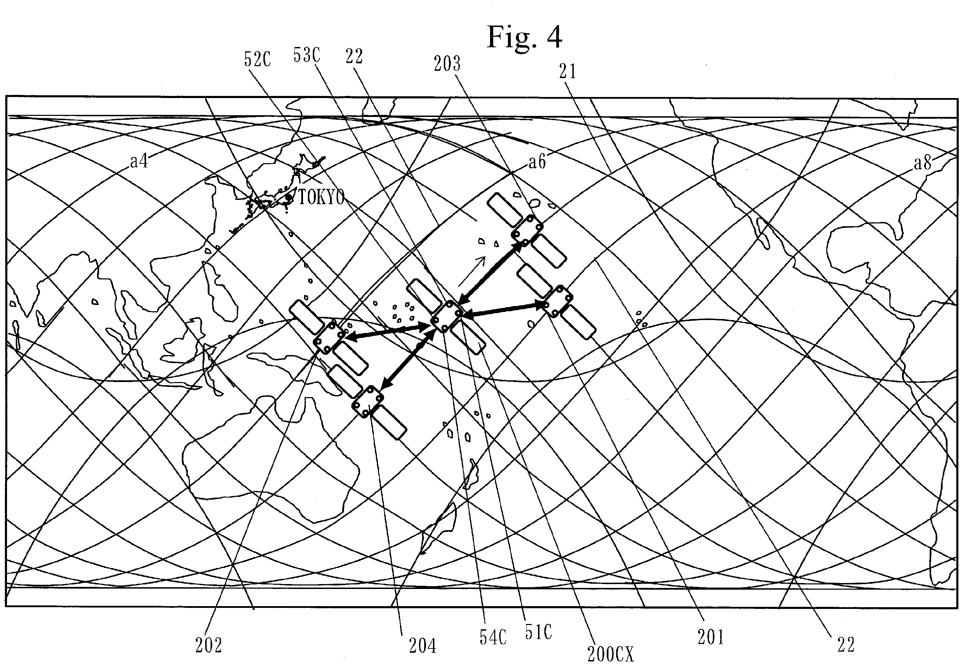

Fig. 4 illustrates the communication satellite 200CX. The communication satellite 200CX has a communication device 53C that communicates with a communication satellite 203 flying in front on the same orbital plane, a communication device 54C that communicates with a communication satellite 204 flying behind on the same orbital plane, and a communication device 51C and a communication device 52C. Aside from the communication satellite 200CX, the communication satellite 200AX or the communication satellite 200BX is also applicable.

### <Satellite constellation: composite single orbital plane>

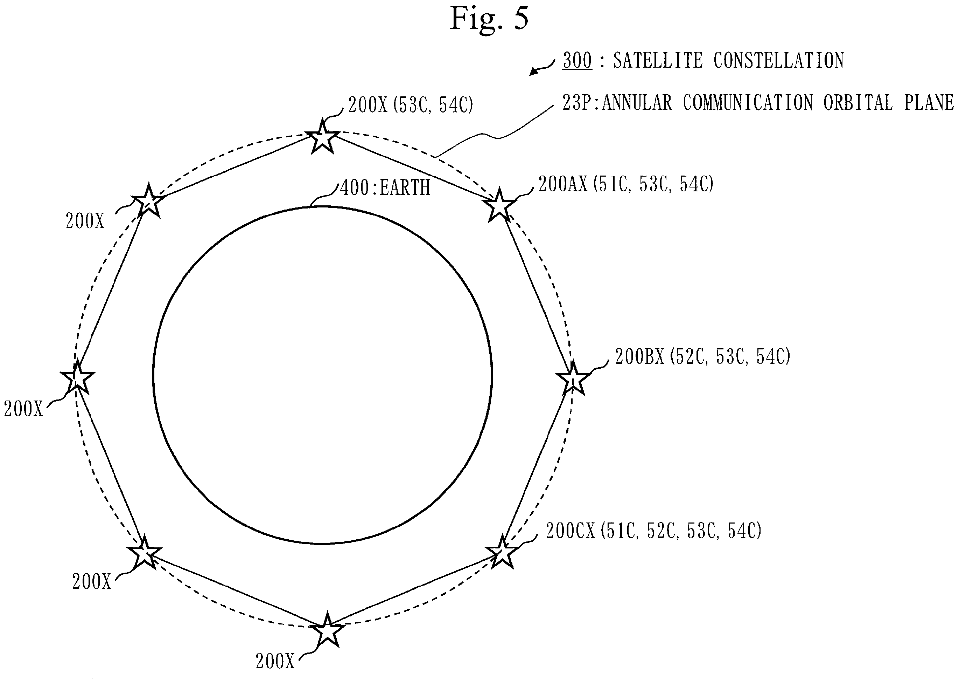

Fig. 5 illustrates the satellite constellation 300. In the satellite constellation 300, eight or more communication satellites each equipped with the communication device 53C and the communication device 54C fly on an annular communication orbital plane 23, and the eight or more communication satellites form an annular communication network. The communication device 53C communicates with the communication satellite flying in front on the annular communication orbital plane 23, which is the same orbital plane. The communication device 54C communicates with the communication satellite flying behind on the annular communication orbital plane 23. In Fig. 5, eight communication satellites indicated by star marks are shown as the communication satellites 200. In the satellite constellation 300 of Fig. 5, at least one of the communication satellites 200AX, 200BX, and 200CX described in Fig. 4 is included. This enables communications between the annular communication orbital plane 23 and the adjacent orbits of the annular communication orbital plane 23. The ability to communicate with the satellites flying in front and behind on the same orbital plane allows satellites for different purposes, such as surveillance satellites and positioning satellites, to carry out their own mission purposes while forming an annular communication network and acquired data to be immediately transmitted over the annular communication network. It goes without saying that the individual communication satellites or various satellites can send and receive information to/from ground facilities; however, when communication capacity is insufficient with the own communication device provided on a satellite, such as for bulk image information acquired by a surveillance satellite, the individual communication satellites or various satellites can perform the following communication. Specifically, the communication satellites or various satellites can transmit information to a ground facility from a satellite on the same orbital plane that is capable of bulk communication with the ground via the annular communication network. In this embodiment, even a satellite like a surveillance satellite or a positioning satellite is a communication satellite if it is capable of communication with other satellites.

### <Inter-satellite communication method and communication between adjacent orbits >

For the satellite constellation 300, the following method can be used.

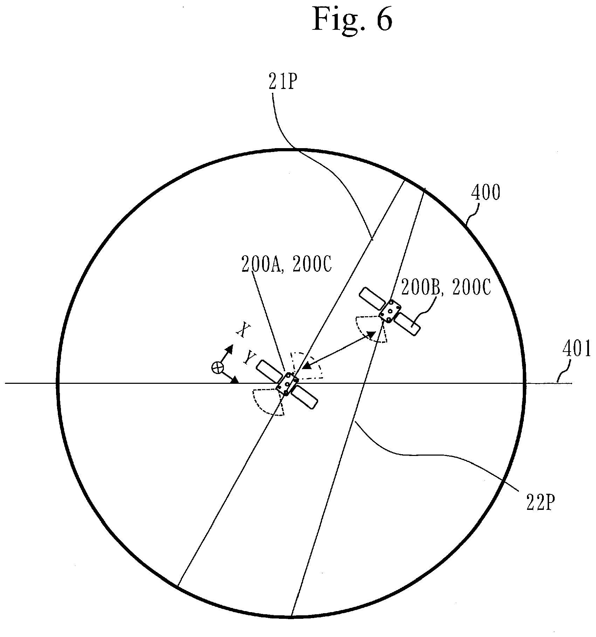

Fig. 6 illustrates communication between adjacent orbits. Communication between adjacent orbits is described with reference to Fig. 6. With respect to an orbital plane 21P of the orbit 21, an orbital plane 22P of the orbit 22 of communication satellite 200B or 200C with the normal vector of the orbital plane being different in the longitude direction is formed. When the communication satellite 200A or the communication satellite 200C passes the right ascension of ascending node, the communication satellite 200B or 200C is flying on the north side of the equatorial plane 401 and continues communication between the different orbital planes for one revolution or more.

### <Satellite constellation, annular communication, and communication between adjacent orbits>

It is also possible to form the following satellite constellation 300. Specifically, the satellite constellation 300 has multiple ones of the annular communication orbital plane 23P shown in Fig. 5.

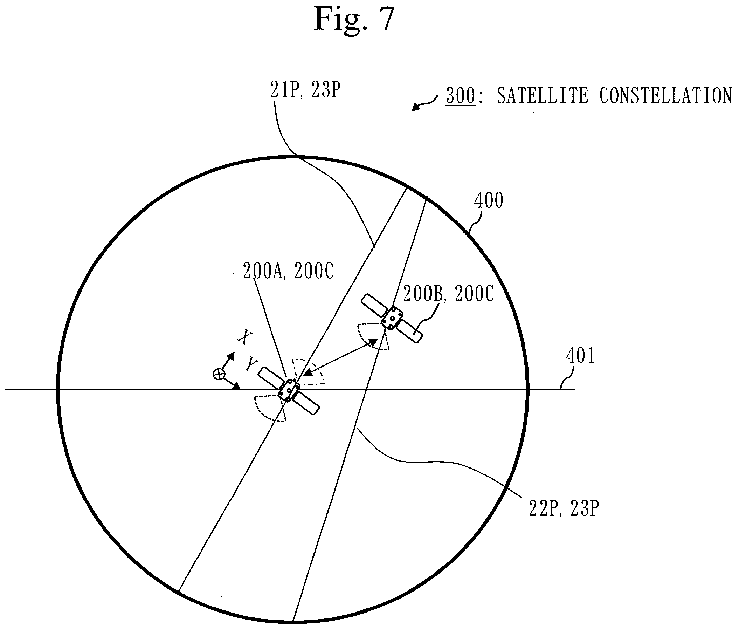

Fig. 7 illustrates the satellite constellation 300 in which annular communication and communication between adjacent orbits are possible. In Fig. 7, communication is performed between the communication satellite 200A or the communication satellite 200C on the annular communication orbital plane 23P shown in Fig. 5 and the communication satellite 200B or the communication satellite 200C on the annular communication orbital plane 23P that is adjacent on the east side. In this way, a satellite constellation 300 which connects multiple annular communication networks via communications between adjacent orbits can be formed.

### <Inter-satellite communication method; continuation for one revolution or more>

In the satellite constellation 300 of Fig. 5, communications between all of the orbital planes continue while a satellite makes one revolution or more in the orbit by the inter-satellite communication method of Fig. 6.

### <Inter-satellite communication method, longitudinal communication network>

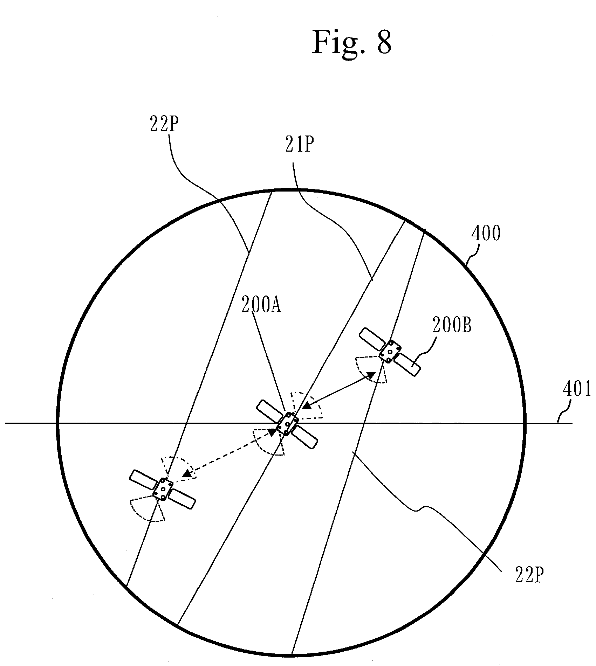

Fig. 8 illustrates an inter-satellite communication method with a longitudinal communication network. In the inter-satellite communication method shown in Fig. 8, eight or more orbital planes having different normal vectors are distributed in the longitude direction. Fig. 8 conceptually shows three orbital planes: the orbital plane 21P and the two orbital planes 22P adjacent to the orbital plane 21P on the east and the west. In Fig. 8, a communication network in which communication circuits are connected around the earth in a full circle with respect to the longitude direction is formed by the inter-satellite communication method of Fig. 6.

### <Satellite constellation 300>

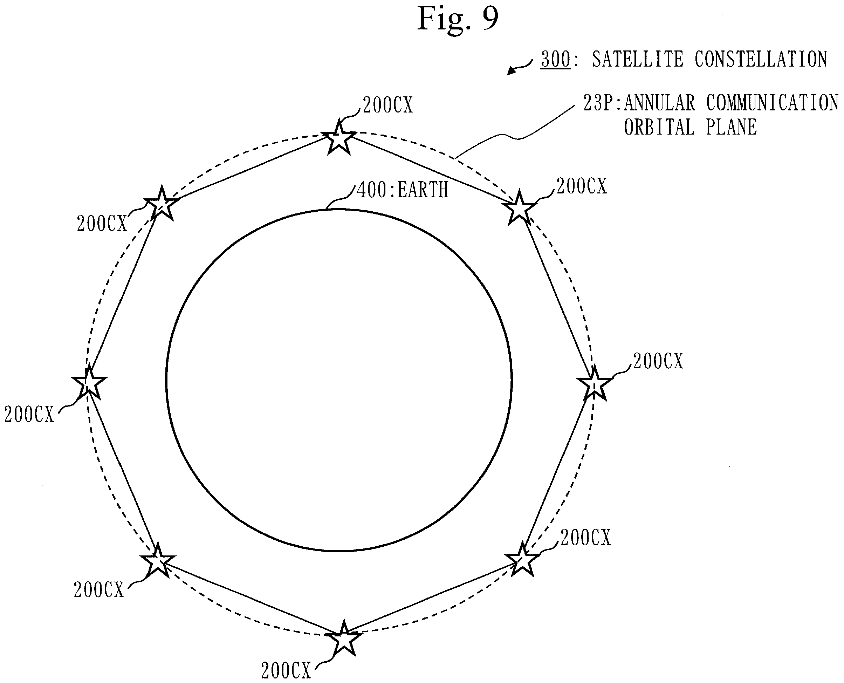

Formation of the satellite constellation 300 of Fig. 9 is also possible.

In Fig. 9, multiple communication satellites 200CX fly on each annular communication orbital plane 23P of multiple annular communication orbital planes 23P from in Fig. 5. Fig. 9 shows only one annular communication orbital plane 23P. By applying the inter-satellite communication method of Fig. 6 to Fig. 9, a satellite constellation can be formed in which multiple annular communication networks formed in the flying direction between multiple orbital planes having different normal vectors in the longitude direction are connected via multiple communication circuits in the longitude direction around the earth in a full circle, thus forming a mesh communication network.

### <Optical communication device>.

Optical communication devices can be used for the communication devices mounted on the communication satellite 200A, the communication satellite 200B, and the communication satellite 200C. That is, communication devices on the same orbital plane can be optical communication devices. More specifically, satellites that fly on different orbital planes may communicate with each other using optical communication devices.

Also, communication devices used for communications on the same orbital plane, namely the communication device 53C and the communication device 54C shown in Fig. 4, may be optical communication devices.

### <Surveillance satellite>

A communication satellite 200CXM which is equipped with an infrared monitoring device and communication devices to communicate with front and rear satellites on the same orbital plane and which transmits monitoring information over a mesh communication network formed by the satellite constellation 300 of Fig. 9 may be deployed in the satellite constellation 300 of Fig. 9.

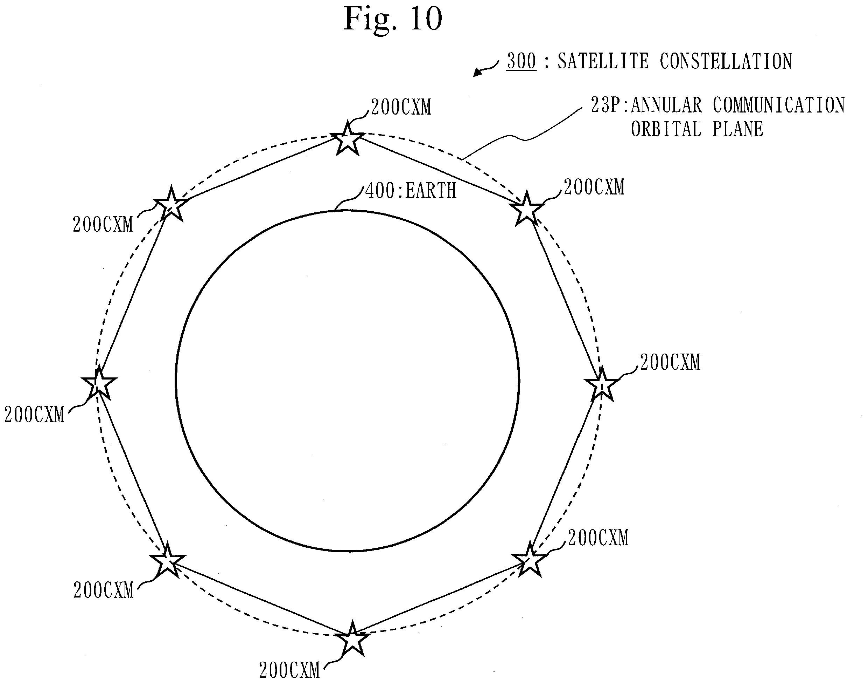

Fig. 10 is a configuration where communication satellites 200CXM are deployed in the satellite constellation 300 of Fig. 9. The communication satellite 200CXM is a variation of the communication satellite 200CX, with an infrared monitoring device mounted on the communication satellite 200CX.

### <Reconnaissance satellite>

The communication satellites 200CXM of Fig. 10 may also include at least either of an optical monitoring device and a radio wave monitoring device in place of an infrared monitoring device.

### <Link 16>

The satellite constellation 300 of Fig. 9 may include a communication satellite 200CXC. The communication satellite 200CXC is a variation where a communication satellite 200CX4 includes an air-to-ground communication device to communicate with a flying object coping device deployed on land, in sea or air, or on the ground. The communication satellite 200CXC transmits monitoring information over a mesh communication network formed by the satellite constellation of Fig. 10.

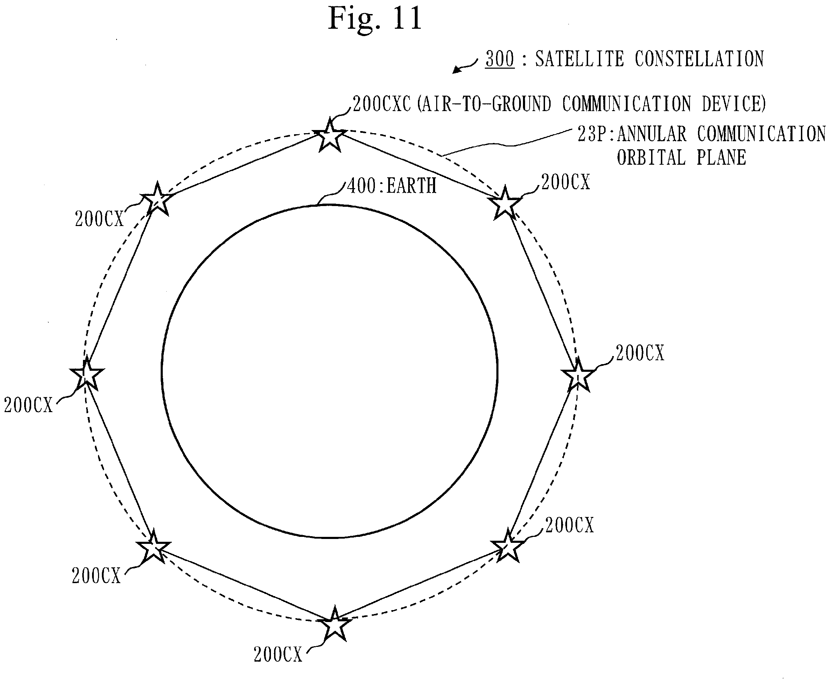

Fig. 11 illustrates a configuration where the satellite constellation 300 includes at least one communication satellite 200CXC.

### ***Description of effects of Embodiment 1 ***

According to Embodiment 1, a transmission system that causes no breakdown of a communication circuit even when adjacent orbits are laterally changed at the northern extremities of orbital planes can be provided. Further, according to Embodiment 1, a satellite communication system that delivers information with a small number of satellites can be constructed.

### (Additional description on hardware configuration of the communication satellite 200)

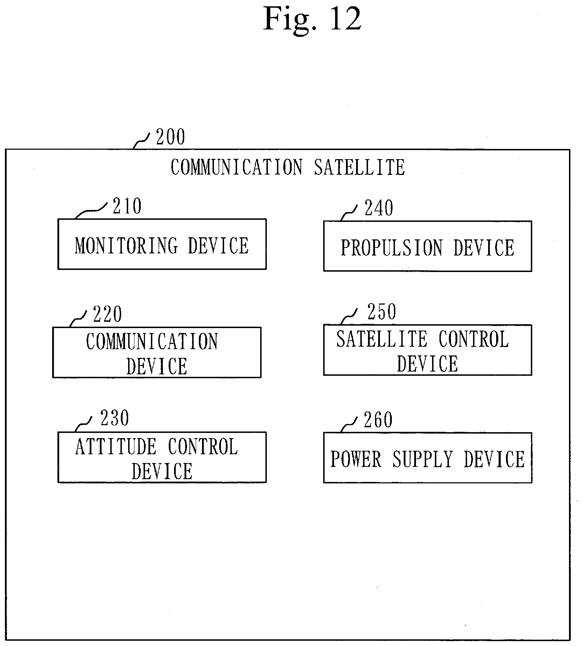

Fig. 12 illustrates a hardware configuration of the communication satellite 200. The hardware configuration of the communication satellite 200 is described with reference to Fig. 12.

Based on Fig. 12, the configuration of communication satellite 200 is described. The communication satellite 200 includes a monitoring device 210, a communication device 220, an attitude control device 230, a propulsion device 240, a satellite control device 250, and a power supply device 260.

The monitoring device 210 is an infrared monitoring device, an optical monitoring device, or a radio wave monitoring device as described above. If the communication satellite 200 is not a surveillance satellite, these monitoring devices are unnecessary.

The communication device 220 is a communication device 51C, a communication device 52C, a communication device 53C, a communication device 54C, or an air-to-ground communication device.

The attitude control device 230 is a device for controlling attitude elements, such as an attitude of the communication satellite 200 and an angular speed of the communication satellite 200. The attitude control device 230 changes each attitude element in a desired direction. Alternatively, the attitude control device 230 maintains each attitude element in a desired direction. The attitude control device 230 includes an attitude sensor, an actuator, and a controller. The attitude sensor can be a gyroscope, an earth sensor, a sun sensor, a star tracker, a thruster, a magnetic sensor, or the like. The actuator can be an attitude control thruster, a momentum wheel, a reaction wheel, a control moment gyro, or the like. The controller controls the actuator in accordance with measurement data of the attitude sensor or various commands from a ground facility 600.

The propulsion device 240 is a device to provide thrust to the communication satellite 200 and changes a speed of the communication satellite 200. Specifically, the propulsion device 240 is an electrical thruster. For example, the propulsion device 240 is an ion engine or a Hall thruster.

The satellite control device 250 is a computer to control devices on the communication satellite 200 and includes a processing circuit. For example, the satellite control device 250 controls the devices in accordance with various commands transmitted from the ground facility 600.

The power supply device 260 includes a solar cell, a battery, a power control device, and the like, and supplies electric power to the devices on the communication satellite 200.

The processing circuit included in the satellite control device 250 is described. The processing circuit may be dedicated hardware or a processor that executes programs stored in memory. In the processing circuit, some of functions may be implemented by dedicated hardware and the remaining functions may be implemented by software or firmware. That is, the processing circuit can be implemented by hardware, software, firmware, or a combination of them. Dedicated hardware is specifically a single circuit, a composite circuit, a programmed processor, a parallel-programmed processor, an ASIC, an FPGA, or a combination of them. ASIC is an abbreviation of Application Specific Integrated Circuit. FPGA is an abbreviation of Field Programmable Gate Array.

### (Hardware configuration of the ground facility)

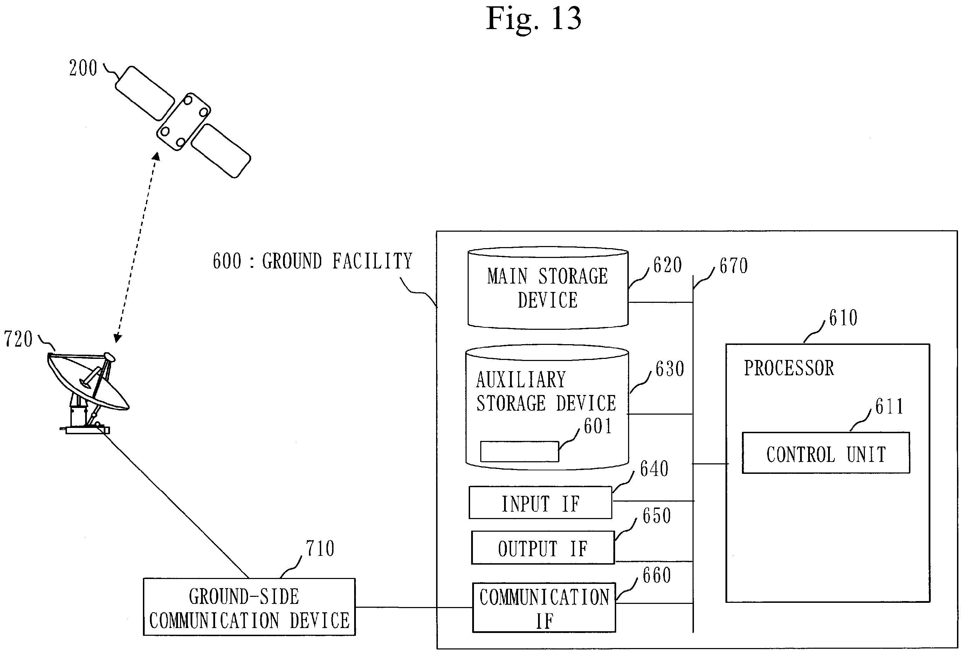

Fig. 13 illustrates a hardware configuration of the ground facility 600. The hardware configuration of the ground facility 600 is described with reference to Fig. 13. The ground facility 600 is a satellite constellation formation device for forming the satellite constellation 300. Alternatively, it is a satellite control device for controlling multiple satellites. The ground facility 600 is a computer. The ground facility 600 includes a processor 6210 as well as other pieces of hardware such as a main storage device 620, an auxiliary storage device 630, an input IF 640, an output IF 650, and a communication IF 660. IF indicates an interface. The processor 610 is connected with the other pieces of hardware via a signal line 670 and controls these other pieces of hardware. The ground facility 600 has a control unit 611 as a functional element. The control unit 611 executes control of the communication satellites 200. Functions of the control unit 611 are realized by cooperation of the processor 610 and a program 601. The communication IF 660 is connected with a ground-side communication device 710. The control unit 611 communicates with the communication satellites 200 via the ground-side communication device 710 and a ground-side antenna 720. The control unit 611 transmits control signals to the communication satellites 200 via the ground-side communication device 710 and the ground-side antenna 720.

The program 601 is a program that causes a computer to execute a process, a procedure, or a step obtaining by reading the "unit" of the control unit 611 as a "process", "procedure", or "step". The program 601 may be provided by being stored on a computer-readable recording medium or may be provided as a program product.

### Reference Signs List

21: orbit; 22: orbit; 23P: annular communication orbital plane; 51C: communication device; 52C: communication device; 53C: communication device; 54C: communication device; 200: communication satellite; 200A: communication satellite; 200B: communication satellite; 200C: communication satellite; 200X: communication satellite; 200AX: communication satellite; 200BX: communication satellite; 200CX: communication satellite; 200CXM: communication satellite; 201: communication satellite; 202: communication satellite; 203: communication satellite; 204: communication satellite; 300: satellite constellation; 400: earth; 401: equatorial plane; 610: processor; 611: control unit; 620: main storage device; 630: auxiliary storage device; 640: input IF; 650: output IF; 660: communication IF; 710: ground-side communication device; 720: ground-side antenna

## Claims

1. A communication satellite that flies in an orbit with an orbital inclination θi deg and comprises a communication device having a visual field change range of ±θi deg around a Z axis with respect to a +X axis, where a +Z axis direction oriented in a plus direction in right-handed coordinates is geocentric direction and a +X axis direction oriented in the plus direction in the right-handed coordinates is forwarding direction, wherein when passing a right ascension of ascending node, the communication satellite performs communication with a satellite flying on a north side of an equatorial plane in an orbit that is adjacent in a longitude direction of a normal vector of an orbital plane of said orbit.

2. A communication satellite that flies in an orbit with an orbital inclination θi deg and comprises a communication device having a visual field change range of ±θi deg around a Z axis with respect to a -X axis oriented in an opposite direction of a +X axis, where a +Z axis direction oriented in a plus direction in right-handed coordinates is geocentric direction and a +X axis direction oriented in the plus direction in the right-handed coordinates is forwarding direction, wherein when passing a right ascension of ascending node, the communication satellite performs communication with a satellite flying on a south side of an equatorial plane in an orbit that is adjacent in a longitude direction of a normal vector of an orbital plane of said orbit.

3. A communication satellite that flies in an orbit with an orbital inclination θi deg and comprises a communication device having a visual field change range of ±θi deg around a Z axis with respect to a +X axis, and a communication device having a visual field change range of ±θi deg around the Z axis with respect to a -X axis oriented in an opposite direction of the +X axis, where a +Z axis direction oriented in a plus direction in right-handed coordinates is geocentric direction and a +X axis direction oriented in the plus direction in the right-handed coordinates is forwarding direction, wherein the communication satellite performs communication with a satellite flying on a north side of an equatorial plane in an orbit that is adjacent in a longitude direction of a normal vector of an orbital plane of said orbit and performs communication with a satellite flying on a south side of the equatorial plane.

4. The communication satellite according to any one of claims 1 to 3, comprising:
a communication device to communicate with a communication satellite flying in front on a same orbital plane; and
a communication device to communicate with a communication satellite flying behind on the same orbital plane.

5. A satellite constellation, in which eight or more communication satellites fly on a same orbital plane and form an annular communication network, the communication satellites each comprising a communication device to communicate with a communication satellite flying in front on the same orbital plane and a communication device to communicate with a communication satellite flying behind on the same orbital plane, wherein
the satellite constellation includes at least one communication satellite according to claim 4.

6. An inter-satellite communication method, wherein
with respect to an orbital plane of the communication satellite according to claim 1 or 3, an orbital plane of the communication satellite according to claim 2 or 3 with a different normal vector in a longitude direction is formed, and
when the communication satellite according to claim 1 or 3 passes a right ascension of ascending node, the communication satellite according to claim 2 or 3 is flying on a north side of the equator and continues communication between different orbital planes for one revolution or more.

7. A satellite constellation having a plurality of said orbital planes set forth in claim 5, wherein
communication is performed between the communication satellite according to claim 1 or 3 and the communication satellite according to claim 2 or 3 such that a plurality of annular communication networks are connected via communications between adjacent orbits.

8. An inter-satellite communication method, wherein
in the satellite constellation according to claim 5, communications between all orbital planes continue while a satellite makes one revolution or more in an orbit by the inter-satellite communication method according to claim 6.

9. An inter-satellite communication method, wherein
eight or more orbital planes having different normal vectors are distributed in a longitude direction, and a communication network in which communication circuits are connected around the earth in a full circle with respect to a longitude direction is formed by the inter-satellite communication method according to claim 6.

10. A satellite constellation, wherein
a plurality of said communication satellites according to claim 3 fly on each orbital plane set forth in claim 5, and by the inter-satellite communication method according to claim 9, a plurality of annular communication networks formed in a flying direction between a plurality of orbital planes having different normal vectors in a longitude direction are connected via a plurality of communication circuits in the longitude direction around the earth in a full circle, thus forming a mesh communication network.

11. The communication satellite according to any one of claims 1 to 3, wherein
the communication device is an optical communication device.

12. The communication satellite according to claim 4, wherein
communication devices on the same orbital plane are optical communication devices.

13. An artificial satellite comprising an infrared monitoring device and communication devices to communicate with front and rear satellites on a same orbital plane, wherein
the artificial satellite transmits monitoring information over a mesh communication network formed by the satellite constellation according to claim 10.

14. An artificial satellite comprising at least either of an optical monitoring device and a radio wave monitoring device, and communication devices to communicate with front and rear communication satellites on a same orbital plane, wherein
the artificial satellite transmits monitoring information over a mesh communication network formed by the satellite constellation according to claim 10.

15. An artificial satellite comprising:
an air-to-ground communication device to communicate with a flying object coping device deployed on land, in sea or air, or on ground; and
communication devices to communicate with front and rear satellites on a same orbital plane, wherein
the artificial satellite transmits monitoring information over a mesh communication network formed by the satellite constellation according to claim 10.

16. A ground facility to transmit control signals to communication satellites constituting the satellite constellation according to claim 10 and to send and receive information.
